# EUROPÄISCHE PATENTSCHRIFT

(11) **EP 2 125 406 B1**
(45) Veröffentlichungstag und Bekanntmachung des Hinweises auf die Patenterteilung: **29.12.2010**
(21) Anmeldenummer: 07820403.9
(22) Anmeldetag: 20.09.2007
(51) Int. Cl.: B60H 1/34

(54) **LUFTAUSSTRÖMER**
AIR DISCHARGE DEVICE
DIFFUSEUR D'AIR

(30) Priorität: 22.12.2006 DE 102006062178
(43) Veröffentlichungstag der Anmeldung: 02.12.2009
(73) Patentinhaber: Faurecia Innenraum Systeme GmbH, 76767 Hagenbach (DE)
(72) Erfinder: BOINAIS, Oliver, West Bloomfield, Michigan 48322 (US); D'ALESSANDRO, Anthony, Ray, Michigan 48096 (US); SCHULZ, Martin, 76185 Karlsruhe (DE)
(74) Vertreter: Richardt, Markus Albert
(86) Internationale Anmeldenummer: PCT/EP2007/059963
(87) Internationale Veröffentlichungsnummer: WO 2008/077655

(56) Entgegenhaltungen:
- EP-A- 0 057 081
- WO-A-2006/125915
- FR-A- 2 784 625
- GB-A- 1 394 478

## Beschreibung

Die Erfindung betrifft einen Luftausströmer, sowie ein Verfahren zur Verwendung eines Luftausströmers.

Aus dem Stand der Technik sind verschiedene Luftausströmer bekannt. Insbesondere ist aus der DE 100 46 721 B4 eine Lüftungsdüse bekannt, welche in ein Kraftfahrzeug, vorzugsweise in dessen Armaturentafel, eingebaut ist. Zum Luftaustritt ist dabei ein kugelabschnittsförmig ausgebildetes Lüftungsteil vorgesehen, welches dreh- und schwenkbar an einem Lagerelement angeordnet ist, welches an einem Lüftungskanal angeschlossen ist. Die US 2005/0239390 A1 beschreibt eine Ventilationsdüse zum Einbau in ein Kraftfahrzeug, wobei die Düse ein Gehäuse aufweist, sowie einen sphärisch geformten Düsenkopf mit Auslassöffnungen, wobei der Düsenkopf drehbar im Gehäuse gelagert ist. Des Weiteren ist aus der US 2004/0224625 A1 ein Abluftstutzen für ein Ventilationssystem in einem Kraftfahrzeug bekannt, welches eine Zirkulationskammer aufweist, welche durch ein Gehäuse mit einer gewölbten Form begrenzt ist. Der Abluftstutzen weist des Weiteren bewegliche Luftablenkungen auf, um den Luftstrom in eine vorgegebene Richtung zu lenken. Die FR 28 86 384 A1 offenbart einen Luftausströmer, bei welchem das Düsengehäuse und das Luftleitelement zur Erzeugung des Coanda-Effekts ausgebildet sind, sodass ein gerichteter Luftstrahl aus der Luftaustrittsöffnung austritt.

Dokument WO-A-2006/125915 offenbart den Gegenstand des Oberbegriffs des Anspruchs 1.

Die genahnten Schriften beschreiben eine Lenkung eines Luftstroms in eine gewünschte Richtung, indem zur Luftlenkung Lamellen oder eine Vielzahl von Lüftungsöffnungen verwendet werden.

Der Erfindung liegt demgegenüber die Aufgabe zugrunde, einen Luftausströmer, sowie ein Verfahren zur Verwendung eines Luftausströmers zu schaffen, bei welchem auf die Verwendung von nach außen sichtbaren Lamellen oder Luftleitelementen verzichtet werden kann.

Die der Erfindung zugrunde liegenden Aufgaben werden jeweils mit den Merkmalen der unabhängigen Patentansprüche gelöst. Bevorzugte Ausführungsformen der Erfindung sind in den abhängigen Patentansprüchen angegeben.

Erfindungsgemäß wird ein Luftausströmer mit einem Düsengehäuse geschaffen, wobei der Luftausströmer eine in axialer Richtung zum Düsengehäuse befindliche Lufteintrittsöffnung und eine der Lufteintrittsöffnung im Wesentlichen gegenüberliegende Luftaustrittsöffnung aufweist. Ferner weist der Luftausströmer ein innerhalb des Düsengehäuses befindliches kegelförmiges Luftleitelement auf, wobei das Luftleitelement mit einer Längsachse in axialer Richtung zum Düsengehäuse angeordnet ist, wobei das Luftleitelement mit seiner Spitzseite zur Luftaustrittsöffnung hin angeordnet ist, wobei das Luftleitelement eine in seiner Längsachse befindliche durchgehende Öffnung aufweist. Der Luftausströmer weist ferner einen Schieber auf, wobei der Schieber zur Aufnahme durch die durchgängige Öffnung des Luftleitelements vorgesehen ist. Außerdem weist der Luftausströmer einen auf der Lufteintrittsöffnung zugewandten Seite an dem Schieber ausgebildeten Stopfen auf, wobei der Stopfen in axialer Richtung durch den-Schieber verschiebbar ausgebildet ist, wobei der Stopfen zur formschlüssigen Abdeckung der Lufteintrittsöffnung ausgebildet ist.

Um auf Luftleitelemente in Form von Lamellen oder einer Vielzahl von Luftaustrittsöffnungen zum Zwecke der Leitung eines Luftstroms in eine gewünschte Richtung zu verzichten, bedient sich der erfindungsgemäße Luftausströmer des Coanda-Effekts. Durch den Coanda-Effekt läuft die Luft innen am Düsengehäuse und damit am kegelförmigen Luftleitelement entlang, ohne sich von diesen Oberflächen abzulösen. Durch die Vorgabe der Luftfließrichtung durch das kegelförmige Luftleitelements werden somit Lamellen an der Luftaustrittsöffnung zur Lenkung des Luftstromes nicht benötigt. Dies hat zum einen den Vorteil einer sauberen ästhetischen Form, als auch aufgrund der Einfachheit des technischen Designs den Vorteil einer hohen mechanischen Stabilität und Haltbarkeit. Ausführungsformen der erfindungsgemäße Vorrichtung haben insbesondere auch den Vorteil einer besonderes bequemen Handhabbarkeit, kostengünstiger Herstellung aufgrund der besonders geringen Anzahl von beweglichen Komponenten und damit einer weitgehenden Verschleißfreiheit.

Nach einer Ausführungsform der Erfindung weist der Schieber einen durch die Luftaustrittsöffnung hindurchreichenden Manipulator auf. Dabei ist das Luftleitelement in einer Richtung senkrecht zur Längsachse des Luftleitelements durch den Manipulator verkippbar im Düsengehäuse angeordnet. Durch das Verkippen des Luftleitelements mit Hilfe des Manipulators ist es möglich, den Luftstrom in eine gewünschte Richtung zu lenken.

Nach einer Ausführungsform der Erfindung sind zwischen der Oberfläche des Luftleitelements und der Oberfläche des Düsengehäuses flächenförmige Elemente angeordnet. Die flächenförmigen Elemente sind dabei mit dem Luftleitelement oder dem Düsengehäuse verbunden und berühren in zumindest einem Kontaktbereich das Luftleitelement oder das Düsengehäuse. Sinn und Zweck der flächenförmigen Elemente ist zum einen die Funktion als Halterung für das Luftleitelement, als auch alternativ oder zusätzlich dazu die Verwendung als zusätzliche Luftleitfläche zur Leitung des Luftstroms in eine gewünschte Richtung.

Nach einer Ausführungsform der Erfindung sind die flächenförmigen Elemente zumindest teilweise in dem Kontaktbereich als Silikonflächen ausgebildet. Durch die Verwendung von elastischen Silikonflächen werden Klappergeräusche in dem Kontaktbereich zum Luftleitelement oder zum Düsengehäuse vermieden. Außerdem wird eine Bewegung des Luftleitelements im Düsengehäuse in einer Richtung senkrecht zur Längsachse des Luftleitelements mit niedriger Reibung ermöglicht.

Nach einer Ausführungsform der Erfindung weist der Stopfen auf der Lufteintrittsöffnung zugewandten Seite eine konvexe Form auf. Durch die konvexe Form des Stopfens ist eine definierte Vorgabe der Fließrichtung des Luftstroms unter Verwendung des Coanda-Effekts möglich.

Nach einer Ausführungsform der Erfindung ist der Schieber in axialer Richtung durch eine Zieh- oder Schiebebewegung des Manipulators verschiebbar ausgebildet. Zusätzlich oder alternativ dazu ist der Schieber durch eine Drehbewegung des Manipulators um eine Längsachse des Schiebers in axialer Richtung verschiebbar ausgebildet. Im Falle eines mittels einer Drehbewegung verschiebbaren Schiebers weisen der Schieber und das Luftleitelement z.B. ein entsprechendes Gewinde zum Ermöglichen der Verschiebung durch die Drehbewegung auf. Durch die Verschiebung des Stopfens in die axiale Richtung durch Bewegen des Schiebers mit Hilfe des Manipulators kann die Lufteintrittsöffnung verschlossen oder geöffnet werden, wodurch der Luftstrom nach gewünschter Intensität eingestellt werden kann.

Nach einer Ausführungsform der Erfindung weist das Luftleitelement einen Arretierungsmechanismus zur Fixierung des Schiebers in zumindest zwei vorbestimmten Positionen auf. Dabei ist der Arretierungsmechanismus zum Beispiel durch einen Push-Push-Arretierungsmechanismus ausgebildet. Damit ist es möglich, die gewünschte Stärke des Luftstromes in einer definierten Weise festzulegen. Eine stufenweise Verstellung der Stärke des Luftstroms hat den Vorteil einer einfachen und reproduzierbaren Einstellmöglichkeit durch den Benutzer.

In einem weiteren Aspekt betrifft die Erfindung ein Verfahren zur Verwendung eines Luftausströmer mit einem Düsengehäuse, einer in axialer Richtung zum Düsengehäuse befindlichen Lufteintrittsöffnung und einer im Wesentlichen der Lufteintrittsöffnung gegenüberliegenden Luftaustrittsöffnung. Der Luftausströmer weist ein kegelförmiges Luftleitelement auf, wobei das Luftleitelement mit einer Längsachse in axialer Richtung zum Düsengehäuse angeordnet ist, wobei das Luftleitelement mit seiner Spitzseite zur Lufteintrittsöffnung hin angeordnet ist, wobei das Luftleitelement eine in seiner Längsachse befindliche durchgängige Öffnung aufweist. Der Luftausströmer weist außerdem einen Schieber auf, wobei der Schieber zur Aufnahme durch die durchgängige Öffnung des Luftleitelements vorgesehen ist, sowie einen auf der Lufteintrittsöffnung zugewandten Seite an den Schieber ausgebildeten Stopfen, wobei der Stopfen in die axiale Richtung durch den Schieber verschiebbar ausgebildet ist, wobei der Stopfen zur formschlüssigen Abdeckung der Lufteintrittsöffnung ausgebildet ist. Nach dem erfindungsgemäßen Verfahren zur Verwendung des Luftausströmers erfolgt das Öffnen oder Schließen der Luftzufuhr durch Verschieben des Schiebers in die axiale Richtung, wodurch damit ein Öffnen oder Schließen der Lufteintrittsöffnung durch den Stopfen erfolgt.

Das Verschieben des Schiebers kann dabei durch eine Zieh- oder Schiebebewegung des Manipulators in die axiale Richtung erfolgen, als auch alternativ oder zusätzlich dazu durch eine Drehbewegung des Manipulators um eine Längsachse des Schiebers.

Nach einer Ausführungsform der Erfindung wird das Luftleitelement durch Verkippung eines am Schieber ausgebildeten, durch die Luftaustrittsöffnung hindurchreichenden Manipulators in einer Richtung senkrecht zur Längsachse des Luftleitelements ausgerichtet. Außerdem weist das Luftleitelement einen Arretierungsmechanismus auf, wobei durch Ziehen oder Schieben des Manipulators in die axiale Richtung der Schieber durch den Arretierungsmechanismus in zumindest zwei vorbestimmten Positionen zur Einstellung der Stärke des Luftstroms fixierbar ist.

Nach einer Ausführungsform der Erfindung weist das Luftleitelement einen Push-Push-Arretierungsmechanismus auf, wobei durch Drücken des Manipulators in die axiale Richtung der Schieber durch den Push-Push-Arretierungsmechanismus in zumindest zwei vorbestimmten Positionen fixierbar ist. Durch den Push-Push-Arretierungsmechanismus ist es möglich, in einer einfachen Weise durch reine Drückbewegungen gewünschte Stärke des Luftstromes einzustellen.

Im Weiteren werden Ausführungsformen der Erfindung anhand der Zeichnungen näher erläutert. Es zeigen:
- Figur 1:: eine schematische Ansicht einer Ausführungsform eines erfindungsge- mäßen Luftausströmers,
- Figur 2:: eine detaillierte Ansicht einer Ausführungsform eines erfindungsgemäßen Luftausströmers,
- Figur 3:: eine schematische Ansicht einer weiteren Ausführungsform eines erfin- dungsgemäßen Luftausströmers,
- Figur 4:: ein Blockdiagramm eines Verfahrens zur Verwendung eines erfindungs- gemäßen Luftausströmers.

Einander entsprechende Elemente sind im Folgenden mit gleichen Bezugszeichen gekennzeichnet.

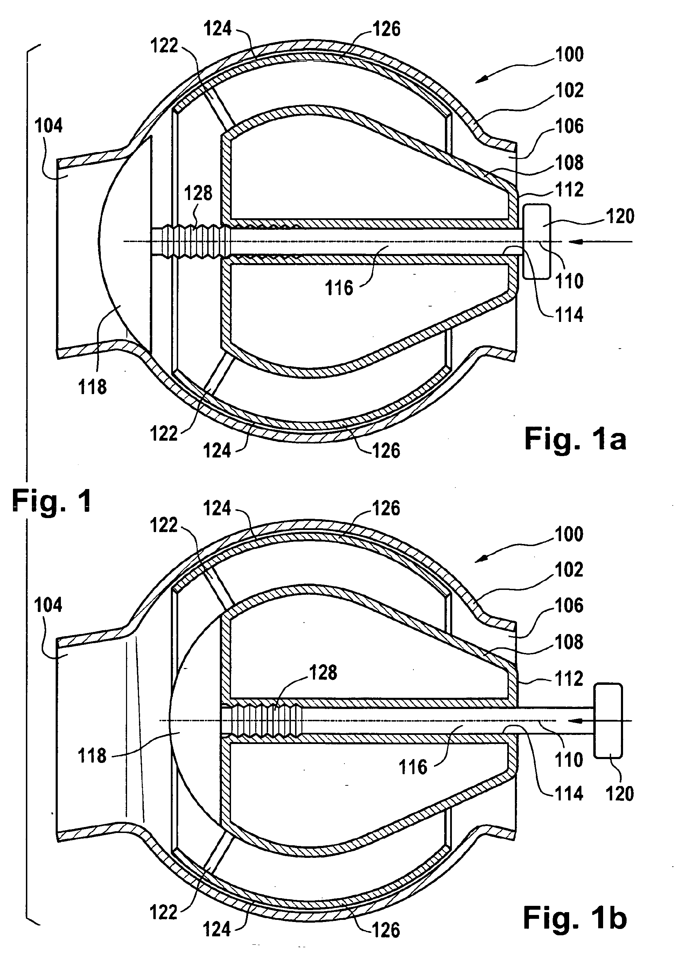

Die Figur 1 zeigt eine schematische Ansicht einer Ausführungsform eines erfindungsgemäßen Luftausströmers 100. Der Luftausströmer 100 ist dabei vorzugsweise zur Verwendung im Frontbereich der Fahrgastzelle eines Kraftfahrzeugs vorgesehen. Es ist jedoch auch eine Verwendung in anderen Transportmitteln wie Schienenfahrzeugen oder Flugzeugen möglich.

Der Luftausströmer 100 besteht aus einem Düsengehäuse 102, welches eine Lufteintrittsöffnung 104 sowie eine der Lufteintrittsöffnung 104 im Wesentlichen gegenüberliegenden Luftaustrittsöffnung 106 aufweist. Das Düsengehäuse 102 hat dabei eine bauchförmige, gewölbte Form. In dem Düsengehäuse befindet sich ein kegelförmiges Luftleitelement 108, wobei das Luftleitelement 108 mit einer Längsachse 110 in axialer Richtung zum Düsengehäuse 102 angeordnet ist, wobei das Luftleitelement 108 mit seiner Spitzseite 112 zur Luftaustrittsöffnung 106 hin angeordnet ist, wobei das Luftleitelement 108 eine in seiner Längsachse 110 befindliche durchgängige Öffnung 114 aufweist. Der Luftausströmer 100 weist außerdem einen Schieber 116 auf, wobei der Schieber 116 zur Aufnahme durch die durchgängige Öffnung 114 des Luftleitelements 108 vorgesehen ist. Auf der der Lufteintrittsöffnung 104 zugewandten Seite ist an dem Schieber 116 ein Stopfen 118 ausgebildet, wobei der Stopfen 118 in axialer Richtung 110 durch den Schieber 116 verschiebbar ausgebildet ist, wobei der Stopfen 118 zur formschlüssigen Abdeckung der Lufteintrittsöffnung 104 ausgebildet ist. So weist der Stopfen 118 im vorliegenden Beispiel eine konvexe Form auf, wodurch in der Figur 1 a der Stopfen 118 formschlüssig die Lufteintrittsöffnung 104 abdeckt. Dadurch wird ein Luftstrom ausgehend von der Lufteintrittsöffnung 104 zur Luftaustrittsöffnung 106 unterbrochen.

Durch zum Beispiel eine Ziehbewegung in die radiale Richtung 110 eines an dem Schieber 116 durch die Luftaustrittsöffnung 106 hindurchreichenden Manipulators 120 ist es möglich, den Stopfen 118 von der Lufteintrittsöffnung 104 zu entfernen. Dadurch ist in der Figur 1 b der Fluss des Luftstromes von der Lufteintrittsöffnung 104 zur Luftaustrittsöffnung 106 freigegeben. Durch die konvexe Form des Stopfens 118 und die kegelförmige Form des Luftleitelements 108, sowie die entsprechende Form des Düsengehäuses 102 läuft der Luftstrom aufgrund des Coanda-Effekts an den entsprechenden Oberflächen des Stopfens 118, des Luftleitelements 108 sowie des Düsengehäuses 102 entlang, ohne sich von diesen Oberflächen abzulösen. Dadurch ist durch das Luftleitelement 108 eine Fließrichtung des Luftstromes in Richtung der Luftaustrittsöffnung 106 vorgegeben. Die Richtung des Luftstromes kann durch Verkippen des Luftleitelements 108 über den Manipulator 120 in einer Richtung senkrecht zur Längsachse 110 des Luftleitelements 108 verändert werden.

Um das Luftleitelement 108 im Düsengehäuse 102 zu haltern, sind zwischen der Oberfläche des Luftleitelements 108 und der Oberfläche des Düsengehäuses 102 flächenförmige Elemente 122 angeordnet. Dabei sind die flächenförmigen Elemente 122 entweder mit dem Luftleitelement 108 oder dem Düsengehäuse 102 fest verbunden. Die flächenförmigen Elemente 122 berühren in zumindest einem Kontaktbereich 124 das Luftleitelement 108 oder das Düsengehäuse 102. Vorzugsweise sind dabei die flächenförmigen Elemente 122 zumindest teilweise in dem Kontaktbereich 124 als Silikonflächen 126 ausgebildet. Durch die Verwendung von den Silikonflächen 126 ist ein sauberes Gleiten bei gleichzeitigem Toleranzausgleich entlang des Kontaktbereichs 124 möglich. Je nach Design der flächenförmigen Elemente 122 können diese auch zusätzlich als Luftleitflächen verwendet werden. Damit ist eine zusätzliche Richtungssteuerung des Luftstromes von der Lufteintrittsöffnung 104 zur Luftaustrittsöffnung 106 möglich.

Um die Stärke des Luftstromes sowie das Öffnen und Schließen der Lufteintrittsöffnung 104 durch den Stopfen 118 gezielt zu steuern, weist das Luftleitelement 108 einen Arretierungsmechanismus zur Fixierung des Schiebers 116 in zumindest zwei vorbestimmten Positionen auf. Im vorliegenden Beispiel ist der Arretierungsmechanismus in Form von Rastelementen 128 ausgebildet. Die Rastelemente 128 befinden sich dabei an dem Luftleitelement 108 und/oder an dem Schieber 116. Durch die Rastelemente 128 ist ein stufenweises Verstellen der Stärke des Luftstromes durch eine Bewegung des Schiebers 116 in axialer Richtung zum Düsengehäuse 102 möglich.

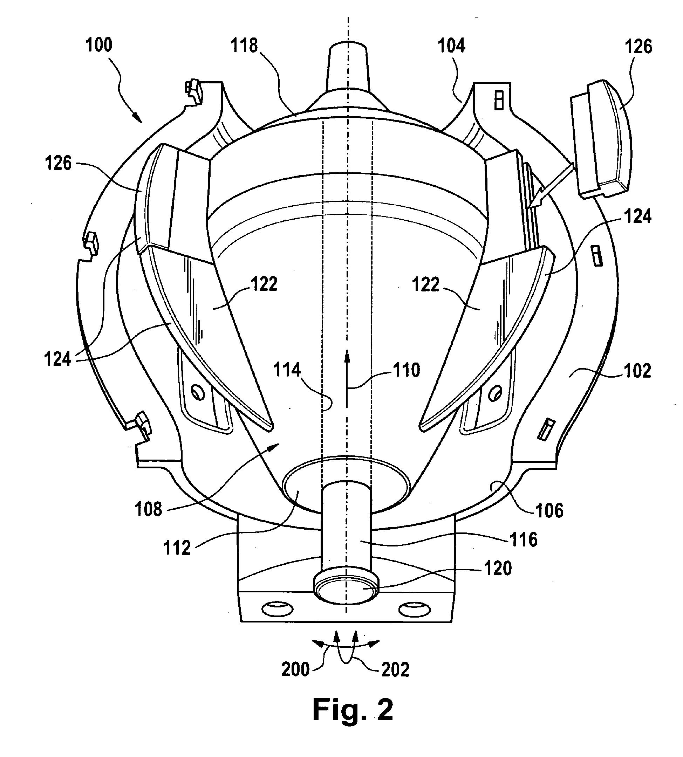

Die Figur 2 zeigt eine detaillierte Ansicht einer Ausführungsform des erfindungsgemäßen Luftausströmers 100 der Figur 1. Das Düsengehäuse 102 des Luftausströmers 100 weist die Lufteintrittsöffnung 104 auf, welche sich in axialer Richtung 110 zum Düsengehäuse 102 befindet. Die Luftaustrittsöffnung 106 befindet sich im Wesentlichen gegenüber der Lufteintrittsöffnung 104. Das kegelförmige Luftleitelement 108 ist mit seiner Längsachse 110 in axialer Richtung 110 im Düsengehäuse 102 angeordnet und weist in seiner Längsachse die durchgängige Öffnung 114 auf. Der Schieber 116, welcher zur Aufnahme durch die durchgängige Öffnung 114 des Luftleitelements 108 vorgesehen ist, weist auf der Lufteintrittsöffnung 104 zugewandten Seite einen an dem Schieber 116 ausgebildeten Stopfen 118 auf, wobei der Stopfen 118 in axialer Richtung 110 durch den Schieber 116 zur formschlüssigen Abdeckung der Lufteintrittsöffnung 104 ausgebildet ist.

Mittels des Manipulators 120, welcher auf der Lufteintrittsöffnung 106 zugewandten Seite am Schieber 116 ausgebildet ist, lässt sich das Luftleitelement 108 in Richtungen 200 und 202 senkrecht zur Längsachse 110 des Luftleitelements 108 im Düsengehäuse 102 verkippen.

Zwischen der Oberfläche des Luftleitelements 108 und der Oberfläche des Düsengehäuses 102 sind die flächenförmigen Elemente 122 angeordnet, wobei im vorliegenden Beispiel die flächenförmige Elemente 122 mit dem Luftleitelement 108 verbunden sind. In den Kontaktbereichen 124 berühren die flächenförmige Elemente 122 das Düsengehäuse 102. An den Kontaktbereichen 124 sind die flächenförmige Elemente 122 dabei durch Silikonflächen 126 ausgebildet.

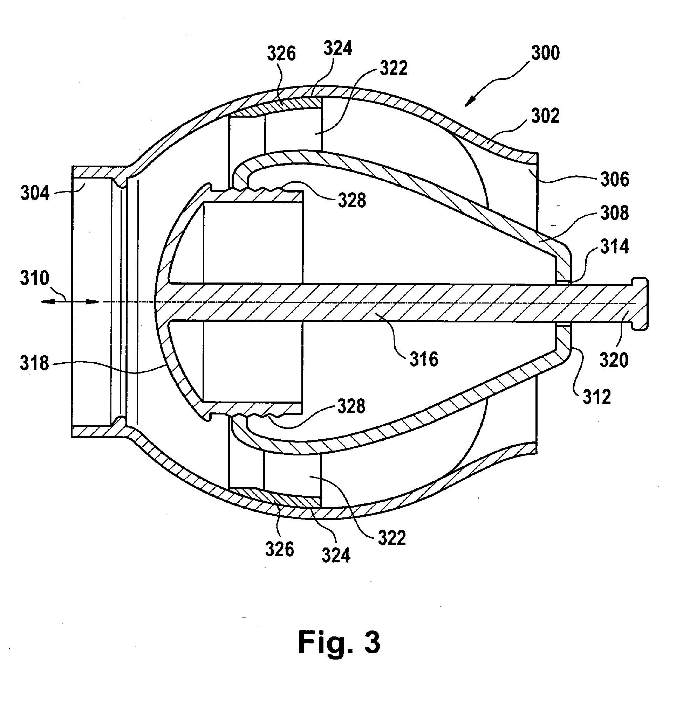

Die Figur 3 zeigt eine schematische Ansicht einer weiteren Ausführungsform eines erfindungsgemäßen Luftausströmers 300. Der Luftausströmer 300 besteht aus einem Düsengehäuse 302, welches wiederum eine bauchförmige Form aufweist. In axialer Richtung 310 zum Düsengehäuse 302 befinden sich eine Lufteintrittsöffnung 304 und eine Luftaustrittsöffnung 306, welche sich im Wesentlichen gegenüberliegen. Ein Luftleitelement 308 ist in axialer Richtung 310 zur Längsachse des Düsengehäuses 302 angeordnet, wobei das Luftleitelement 308 mit seiner Spitzseite 312 zur Luftaustrittsöffnung 306 hin angeordnet ist. Außerdem weist das Luftleitelement 308 eine in seiner Längsachse 310 befindliche durchgängige Öffnung 314 auf. Auf der Lufteintrittsöffnung 304 zugewandten Seite ist an dem Schieber 316 ein Stopfen 318 mit konvexer Form ausgebildet, wobei die Wölbung des Stopfens 318 zur Lufteintrittsöffnung 304 weist. Der Stopfen 318 ist über den Schieber in axialer Richtung 110 verschiebbar ausgebildet und dient zur Abdeckung der Lufteintrittsöffnung 304.

Ein Manipulator 320, welcher an dem Schieber 316 auf der Lufteintrittsöffnung 306 zugewandten Seite ausgebildet ist, dient zur Verkippung des Luftleitelements 308 im Düsengehäuse 302 in einer Richtung 310 senkrecht zur Längsachse des Luftleitelements 308. Zur Führung des Luftleitelements 308 im Düsengehäuse 302 dienen flächenförmige Elemente 322, welche zwischen der Oberfläche des Luftleitelements 308 und der Oberfläche des Düsengehäuses 302 angeordnet sind und dabei entweder fest mit dem Luftleitelement 308 oder fest mit dem Düsengehäuse 302 verbunden sind. An Kontaktbereichen 324, in welchen die flächenförmige Elemente 322 das Luftleitelement 308 oder das Düsengehäuse 302 berühren, sind die flächenförmige Elemente 322 vorzugsweise als Silikonflächen 326 ausgebildet.

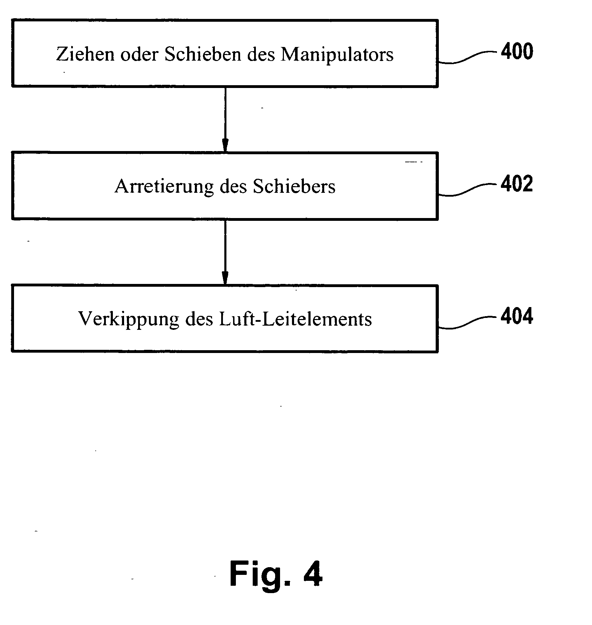

Zur Fixierung des Schiebers 316 in zumindest zwei vorbestimmten Positionen weist das Luftleitelement 308 bzw. der Stopfen 318 Rastelemente 328 auf. Durch Ziehen oder Drücken des Schiebers 316 mittels des Manipulators 320 kann damit der Luftstrom von der Lufteintrittsöffnung 304 zur Luftaustrittsöffnung 306 stufenweise reguliert werden. Die Figur 4 zeigt ein Blockdiagramm eines Verfahrens zur Verwendung eines erfindungsgemäßen Luftausströmers. Der Luftausströmer besteht dabei aus einem Düsengehäuse, einer in axialer Richtung zum Düsengehäuse befindlichen Lufteintrittsöffnung und einer im Wesentlichen der Lufteintrittsöffnung gegenüberliegenden Luftaustrittsöffnung. Der Luftausströmer besteht weiter aus einem kegelförmigen Luftleitelement, wobei das Luftleitelement mit einer Längsachse in axialer Richtung zum Düsengehäuse angeordnet ist, wobei das Luftleitelement mit seiner Spitzseite zur Luftaustrittsöffnung hin angeordnet ist und wobei das Luftleitelement eine in seiner Längsachse befindliche durchgängige Öffnung aufweist. Ferner weist der Luftausströmer einen Schieber auf, wobei der Schieber zur Aufnahme durch die durchgängige Öffnung des Luftleitelements vorgesehen ist und einem auf der Lufteintrittsöffnung zugewandten Seite an dem Schieber ausgebildeten Stopfen, wobei der Stopfen in die axiale Richtung durch den Schieber verschiebbar ausgebildet ist, wobei der Stopfen zur formschlüssigen Abdeckung der Lufteintrittsöffnung ausgebildet ist.

In Schritt 400 erfolgt das Öffnen oder Schließen der Luftzufuhr durch Ziehen oder Schieben des Manipulators in die axiale Richtung und damit ein Öffnen oder Schließen der Lufteintrittsöffnungen durch den Stopfen. Vorzugsweise weist das Luftleitelement einen Arretierungsmechanismus auf, womit in Schritt 402 eine Fixierung des Schiebers durch den Arretierungsmechanismus in einer vorbestimmten Position erfolgt. In Schritt 404 wird das Luftleitelement durch Verkippung in einer Richtung senkrecht zur Längsachse des Luftleitelements mit Hilfe eines am Schieber ausgebildeten, durch die Luftaustrittsöffnung hindurchreichenden Manipulators, ausgerichtet.

Alternativ zu Zieh- und Schiebbewegungen des Manipulators in die axiale Richtung zur Fixierung des Schiebers in vorbestimmten Positionen durch den Arretierungsmechanismus ist die Verwendung eines Push-Push-Arretierungsmechanismus möglich. In diesem Fall kann durch ausschließliches Drücken des Manipulators in die axiale Richtung der Schieber in zumindest zwei vorbestimmten Positionen fixiert werden.

### Bezugszeichenliste

- 100: Luftausströmer
- 102: Düsengehäuse
- 104: Lufteintrittsöffnung
- 106: Luftaustrittsöffnung
- 108: Luft-Leitelement
- 110: Längsachse
- 112: Spitzseite
- 114: Öffnung
- 116: Schieber
- 118: Stopfen
- 120: Manipulator
- 122: Element
- 124: Kontaktbereich
- 126: Silikonfläche
- 128: Rastelement

- 200: Richtung
- 202: Richtung

- 300: Luftausströmer
- 302: Düsengehäuse
- 304: Lufteintrittsöffnung
- 306: Luftaustrittsöffnung
- 308: Luft-Leitelement
- 310: Längsachse
- 312: Spitzseite
- 314: Öffnung
- 316: Schieber
- 318: Stopfen
- 320: Manipulator
- 322: Element
- 324: Kontaktbereich
- 326: Silikonfläche
- 328: Rastelement

## Patentansprüche

1. Luftausströmer (100) mit
- einem Düsengehäuse (102),
- einer in axialer Richtung zum Düsengehäuse (102) befindlichen Lufteintrittsöffnung (104) und einer der Lufteintrittsöffnung (104) im Wesentlichen gegenüberliegenden Luftaustrittsöffnung (106),
- einem kegelförmigen Luft-Leitelement (108), wobei das Luft-Leitelement (108) mit einer Längsachse (110) in axialer Richtung zum Düsengehäuse (102) angeordnet ist, wobei das Luft-Leitelement (108) mit seiner Spitzseite (112) zur Luftaustrittsöffnung (106) hin angeordnet ist wobei das Düsengehäuse (102) und das Luftleitelement zur Erzeugung des Coanda-Effekts ausgebildet sind, so dass ein gerichteter Luftstrahl aus der Luftaustrittsöffnung (106) austritt, **dadurch gekennzeichnet, dass** das LuftLeitelement (108) eine in seiner Längsachse (110) befindliche durchgängige Öffnung (114) aufweist, und
- wobei einen Schieber (116) zur Aufnahme durch die durchgängige Öffnung (114) des Luft-Leitelements (108) vorgesehen ist, und wobei
- einem auf der Lufteintrittsöffnung (104) zugewandten Seite an dem Schieber (116) ausgebildeten Stopfen (118), wobei der Stopfen (118) in axialer Richtung durch den Schieber (116) verschiebbar ausgebildet ist, wobei der Stopfen (118) zur formschlüssigen Abdeckung der Lufteintrittsöffnung (104) ausgebildet ist.

2. Luftausströmer (100) nach Anspruch 1, wobei der Schieber (116) einen durch die Luftaustrittsöffnung (106) hindurchreichenden Manipulator (120) aufweist.

3. Luftausströmer (100) nach einem der vorigen Ansprüche, wobei das LuftLeitelement (108) durch den Manipulator (120) in einer Richtung senkrecht zur Längsachse (110) des Luft-Leitelements (108) verkippbar im Düsengehäuse (102) angeordnet ist.

4. Luftausströmer (100) nach einem der vorigen Ansprüche, wobei zwischen der Oberfläche des Luft-Leitelements (108) und der Oberfläche des Düsengehäuses (102) flächenförmige Elemente (122) angeordnet sind.

5. Luftausströmer (100) nach Anspruch 4, wobei die flächenförmigen Elemente -(122) mit dem Luft-Leitelement (108) oder dem Düsengehäuse (102) verbunden sind.

6. Luftausströmer (100) nach Anspruch 5, wobei die flächenförmigen Elemente (122) in zumindest einem Kontaktbereich (124) das Luft-Leitelement (108) oder das Düsengehäuse (102) berühren.

7. Luftausströmer (100) nach Anspruch 6, wobei die flächenförmigen Elemente (122) zumindest teilweise in dem Kontaktbereich (124) als Silikonflächen (126) ausgebildet sind.

8. Luftausströmer (100) nach einem der vorigen Ansprüche, wobei die flächenförmigen Elemente (122) als Halterung für das Luft-Leitelement (108) ausgebildet sind.

9. Luftausströmer (100) nach einem der vorigen Ansprüche, wobei die flächenförmigen Elemente (122) als Luftleitflächen ausgebildet sind.

10. Luftausströmer (100) nach einem der vorigen Ansprüche, wobei der Stopfen (118) auf der Lufteintrittsöffnung (104) zugewandten Seite eine konvexe Form aufweist.

11. Luftausströmer (100) nach einem der vorigen Ansprüche, wobei der Schieber (116) in axialer Richtung durch eine Ziehbewegung oder Schiebebewegung des Manipulators (120) verschiebbar ausgebildet ist.

12. Luftausströmer (100) nach einem der vorigen Ansprüche, wobei der Schieber (116) durch eine Drehbewegung des Manipulators (120) um eine Längsachse (110) des Schiebers (116) in axialer Richtung verschiebbar ausgebildet ist.

13. Luftausströmer (100) nach einem der vorigen Ansprüche, wobei das LuftLeitelement (108) einen Arretierungsmechanismus (128) zur Fixierung des Schiebers (116) in zumindest zwei vorbestimmten Positionen aufweist.

14. Luftausströmer (100) nach Anspruch 13, wobei der Arretierungsmechanismus (128) durch einen Push-Push Arretierungsmechanismus ausgebildet ist.

15. Verfahren zur Verwendung eines Luftausströmers mit
- einem Düsengehäuse (102),
- einer in axialer Richtung zum Düsengehäuse (102) befindlichen Lufteintrittsöffnung (104) und einer im Wesentlichen der Lufteintrittsöffnung (104) gegenüberliegenden Luftaustrittsöffnung (106),
- einem kegelförmigen Luft-Leitelement (108), wobei das Luft-Leitelement (108) mit einer Längsachse (110) in axialer Richtung zum Düsengehäuse (102) angeordnet ist, wobei das Luft-Leitelement (108) mit seiner Spitzseite (112) zur Luftaustrittsöffnung (106) hin angeordnet ist, wobei das LuftLeitelement (108) eine in seiner Längsachse (110) befindliche durchgängige Öffnung (114) aufweist,
- einem Schieber (116), wobei der Schieber (116) zur Aufnahme durch die durchgängige Öffnung (114) des Luft-Leitelements (108) vorgesehen ist,
- einem auf der Lufteintrittsöffnung (104) zugewandten Seite an dem Schieber (116) ausgebildeten Stopfen (118), wobei der Stopfen (118) in die axiale Richtung durch den Schieber (116) verschiebbar ausgebildet ist, wobei der Stopfen (118) zur formschlüssigen Abdeckung der Lufteintrittsöffnung (104) ausgebildet ist,
wobei das Düsengehäuse (102) und das Luftleitelement zur Erzeugung des Coanda-Effekts ausgebildet sind, sodass ein gerichteter Luftstrahl aus der Luftaustrittsöffnung (106) austritt,
mit den folgenden Schritten:
- Öffnen oder Schließen der Luftzufuhr durch Verschieben des Schiebers (116) in die axiale Richtung und damit Öffnen oder Schließen der Lufteintrittsöffnung (104) durch den Stopfen (118).

## Claims

1. Air vent (100) having
- a nozzle housing (102),
- an air inlet opening (104) which is situated in the axial direction with respect to the nozzle housing (102), and an air outlet opening (106) substantially opposite the air inlet opening (104),
- a conical air guiding element (108), with the air guiding element (108) being arranged with a longitudinal axis (110) in the axial direction with respect to the nozzle housing (102), with the air guiding element (108) being arranged with its tapered side (112) towards the air outlet opening (106), with the nozzle housing (102) and the air guiding element being designed to generate the Coanda effect such that a directed air jet emerges from the air outlet opening (106), **characterized in that** the air guiding element (108) has a through opening (114) situated in its longitudinal axis (110), and
- with a slider (116) being provided so as to be held by the through opening (114) of the air guiding element (108), and
- with a plug (118) formed on the slider (116) on the side facing towards the air inlet opening (104), with the plug (118) being designed such that it can be moved in the axial direction by the slider (116), with the plug (118) being designed for covering the air inlet opening (104) in a positively locking manner.

2. Air vent (100) according to Claim 1, with the slider (116) having a manipulator (120) which extends through the air outlet opening (106).

3. Air vent (100) according to one of the preceding claims, with the air guiding element (108) being arranged in the nozzle housing (102) so as to be tiltable in a direction perpendicular to the longitudinal axis (110) of the air guiding element (108) by means of the manipulator (120).

4. Air vent (100) according to one of the preceding claims, with planiform elements (122) being arranged between the surface of the air guiding element (108) and the surface of the nozzle housing (102).

5. Air vent (100) according to Claim 4, with the planiform elements (122) being connected to the air guiding element (108) or the nozzle housing (102).

6. Air vent (100) according to Claim 5, with the planiform elements (122) making contact with the air guiding element (108) or the nozzle housing (102) in at least one contact region (124).

7. Air vent (100) according to Claim 6, with the planiform elements (122) being at least partially formed as silicone surfaces (126) in the contact region (124).

8. Air vent (100) according to one of the preceding claims, with the planiform elements (122) being designed as a supporting means for the air guiding element (108).

9. Air vent (100) according to one of the preceding claims, with the planiform elements (122) being designed as air guiding surfaces.

10. Air vent (100) according to one of the preceding claims, with the plug (118) having a convex shape on the side facing towards the air inlet opening (104).

11. Air vent (100) according to one of the preceding claims, with the slider (116) being designed such that it can be moved in the axial direction by means of a pulling movement or pushing movement of the manipulator (120).

12. Air vent (100) according to one of the preceding claims, with the slider (116) being designed such that it can be moved in the axial direction by means of a rotational movement of the manipulator (120) about a longitudinal axis (110) of the slider (116).

13. Air vent (100) according to one of the preceding claims, with the air guiding element (108) having a locking mechanism (128) for fixing the slider (116) in at least two predetermined positions.

14. Air vent (100) according to Claim 13, with the locking mechanism (128) being formed by a push-push locking mechanism.

15. Method for using an air vent having
- a nozzle housing (102),
- an air inlet opening (104) which is situated in the axial direction with respect to the nozzle housing (102), and an air outlet opening (106) substantially opposite the air inlet opening (104),
- a conical air guiding element (108), with the air guiding element (108) being arranged with a longitudinal axis (110) in the axial direction with respect to the nozzle housing (102), with the air guiding element (108) being arranged with its tapered side (112) towards the air outlet opening (106), with the air guiding element (108) having a through opening (114) situated in its longitudinal axis (110),
- having a slider (116), with the slider (116) being provided so as to be held by the through opening (114) of the air guiding element (108),
- having a plug (118) formed on the slider (116) on the side facing towards the air inlet opening (104), with the plug (118) being designed such that it can be moved in the axial direction by the slider (116), with the plug (118) being designed for covering the air inlet opening (104) in a positively locking manner,
with the nozzle housing (102) and the air guiding element being designed to generate the Coanda effect such that a directed air jet emerges from the air outlet opening (106),
having the following steps:
- opening or closing the air supply by moving the slider (116) in the axial direction, and thereby opening or closing the air inlet opening (104) by means of the plug (118).

## Revendications

1. Diffuseur d'air (100), avec
- un corps de buse (102),
- une ouverture d'entrée d'air (104) se trouvant en direction axiale du corps de buse (102) et une ouverture de sortie d'air (106) essentiellement opposée à l'ouverture d'entrée d'air (104),
- un élément de guidage d'air de forme conique (108), dans lequel l'élément de guidage d'air (108) est disposé avec un axe longitudinal (110) en direction axiale du corps de buse (102), dans lequel l'élément de guidage d'air (108) est disposé avec son côté en pointe (112) vers l'ouverture de sortie d'air (106), dans lequel le corps de buse (102) et l'élément de guidage d'air sont conçus pour la production de l'effet Coanda, de telle manière qu'un jet d'air dirigé sorte de l'ouverture de sortie d'air (106),
**caractérisé en ce que**
- l'élément de guidage d'air (108) présente une ouverture de passage (114) située sur son axe longitudinal (110), et
- dans lequel il est prévu un coulisseau (116) à loger à travers l'ouverture de passage (114) de l'élément de guidage d'air (108), et
- dans lequel un bouchon (118) est formé sur le coulisseau (116) sur le côté tourné vers l'ouverture d'entrée d'air (104), dans lequel le bouchon (118) est réalisé de façon coulissante en direction axiale au moyen du coulisseau (116), dans lequel le bouchon (118) est conçu pour l'obturation de l'ouverture d'entrée d'air (104) par complémentarité de forme.

2. Diffuseur d'air (100) selon la revendication 1, dans lequel le coulisseau (116) présente un manipulateur (120) pénétrant à travers l'ouverture de sortie d'air (106).

3. Diffuseur d'air (100) selon l'une quelconque des revendications précédentes, dans lequel l'élément de guidage d'air (108) est disposé dans le corps de buse (102) de façon inclinable au moyen du manipulateur (120) dans une direction perpendiculaire à l'axe longitudinal (110) de l'élément de guidage d'air (108).

4. Diffuseur d'air (100) selon l'une quelconque des revendications précédentes, dans lequel des éléments de forme plate (122) sont disposés entre la surface de l'élément de guidage d'air (108) et la surface du corps de buse (102).

5. Diffuseur d'air (100) selon la revendication 4, dans lequel les éléments de forme plate (122) sont reliés à l'élément de guidage d'air (108) ou au corps de buse (102).

6. Diffuseur d'air (100) selon la revendication 5, dans lequel les éléments de forme plate (122) touchent l'élément de guidage d'air (108) ou le corps de buse (102) dans au moins une zone de contact (124).

7. Diffuseur d'air (100) selon la revendication 6, dans lequel les éléments de forme plate (122) sont réalisés sous la forme de faces de silicone (126) au moins en partie dans la zone de contact (124).

8. Diffuseur d'air (100) selon l'une quelconque des revendications précédentes, dans lequel les éléments de forme plate (122) sont réalisés sous la forme de support pour l'élément de guidage d'air (108).

9. Diffuseur d'air (100) selon l'une quelconque des revendications précédentes, dans lequel les éléments de forme plate (122) sont réalisés sous la forme de faces de guidage d'air.

10. Diffuseur d'air (100) selon l'une quelconque des revendications précédentes, dans lequel le bouchon (118) présente une forme convexe sur le côté tourné vers l'ouverture d'entrée d'air (104).

11. Diffuseur d'air (100) selon l'une quelconque des revendications précédentes, dans lequel le coulisseau (116) est réalisé de façon coulissante en direction axiale au moyen d'un mouvement de traction ou d'un mouvement de poussée du manipulateur (120).

12. Diffuseur d'air (100) selon l'une quelconque des revendications précédentes, dans lequel le coulisseau (116) est réalisé de façon coulissante en direction axiale au moyen d'un mouvement de rotation du manipulateur (120) autour d'un axe longitudinal (110) du coulisseau (116).

13. Diffuseur d'air (100) selon l'une quelconque des revendications précédentes, dans lequel l'élément de guidage d'air (108) comporte un mécanisme de blocage (128) pour la fixation du coulisseau (116) dans au moins deux positions prédéterminées.

14. Diffuseur d'air (100) selon la revendication 13, dans lequel le mécanisme de blocage (128) est réalisé sous la forme d'un mécanisme de blocage va-et-vient.

15. Procédé d'utilisation d'un diffuseur d'air avec
- un corps de buse (102),
- une ouverture d'entrée d'air (104) se trouvant en direction axiale du corps de buse (102) et une ouverture de sortie d'air (106) essentiellement opposée à l'ouverture d'entrée d'air (104),
- un élément de guidage d'air de forme conique (108), dans lequel l'élément de guidage d'air (108) est disposé avec un axe longitudinal (110) en direction axiale du corps de buse (102), dans lequel l'élément de guidage d'air (108) est disposé avec son côté en pointe (112) vers l'ouverture de sortie d'air (106), dans lequel l'élément de guidage d'air (108) présente une ouverture de passage (114) située sur son axe longitudinal (110),
- un coulisseau (116), dans lequel le coulisseau (116) est prévu pour être logé à travers l'ouverture de passage (114) de l'élément de guidage d'air (108),
- un bouchon (118) formé sur le coulisseau (116) sur le côté tourné vers l'ouverture d'entré d'air (104), dans lequel le bouchon (118) est réalisé de façon coulissante en direction axiale au moyen du coulisseau (116), dans lequel le bouchon (118) est conçu pour l'obturation de l'ouverture d'entrée d'air (104) par complémentarité de forme,
dans lequel le corps de buse (102) et l'élément de guidage d'air sont conçus pour la production de l'effet Coarda, de telle manière qu'un jet d'air dirigé sorte de l'ouverture de sortie d'air (106), avec les étapes suivantes:
- ouvrir ou fermer l'arrivée d'air par déplacement du coulisseau (116) dans la direction axiale et ainsi ouvrir ou fermer l'ouverture d'entrée d'air (104) au moyen du bouchon (118).
